# EUROPÄISCHE PATENTSCHRIFT

(11) **EP 3 216 954 B1**
(45) Veröffentlichungstag und Bekanntmachung des Hinweises auf die Patenterteilung: **30.12.2020**
(21) Anmeldenummer: 17157749.7
(22) Anmeldetag: 24.02.2017
(51) Int. Cl.: E05B 67/00, E05B 71/00, B62H 5/00

(54) **KETTENSCHLOSS**
CHAIN LOCK
SERRURE À CHAÎNE

(30) Priorität: 11.03.2016 DE 102016104474
(43) Veröffentlichungstag der Anmeldung: 13.09.2017
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- DE-A1-102006 057 759
- DE-A1-102009 039 156
- DE-B3-102006 006 891
- US-A- 1 511 119

## Beschreibung

Die vorliegende Erfindung betrifft ein Kettenschloss mit wenigstens einem Sicherungsteil und einer Kette, die an einem Ende dauerhaft an dem Sicherungsteil befestigt ist.

Ein derartiges Kettenschloss dient beispielsweise dazu, Fahrräder oder Motorräder gegen eine unbefugte Benutzung oder gegen Diebstahl zu sichern. Die Kette kann an dem anderen Ende dauerhaft an einem weiteren Sicherungsteil des Kettenschlosses befestigt sein, wobei die Sicherungsteile aneinander verriegelbar sind, um eine geschlossene Schlaufe zu bilden. Hierfür kann das Kettenschloss beispielsweise einen Zahlenkombinations-Verriegelungsmechanismus oder einen schlüsselbetätigten Verriegelungsmechanismus aufweisen.

Aus dem Dokument DE 10 2009 039 156 A1 ist ein Kettenschloss bekannt, bei dem eine Kette an einem Ende dauerhaft an einem Sicherungsteil (z.B. Zylindergehäuse) befestigt ist, indem zwei Befestigungsstifte in eine Umfangsnut eines Kettenanschlussstücks eingreifen. Diese Befestigungsart hat den Vorteil, dass das Anschlussstück um seine Längsachse drehbar mit dem Sicherungsteil verbunden ist. Allerdings ist diese Befestigungsart auch unerwünscht aufwendig, da sie eine hohe Fertigungsgenauigkeit (z.B. Positionierung der Befestigungsstifte innerhalb der Umfangsnut) voraussetzt.

Eine einfachere Befestigung ist möglich, wenn ein Kettenendglied zumindest im Wesentlichen starr an dem zugeordneten Sicherungsteil befestigt ist, insbesondere durch einen Presssitz (Quetschverbindung). Hierbei besteht jedoch das Problem, dass durch Aufbringen eines hohen Drehmoments auf das Kettenendglied relativ zu dem Sicherungsteil (beispielsweise mittels eines in das Kettenendglied eingeführten Schraubendrehers) das Kettenendglied unter Umständen aus dem Sicherungsteil herausgedreht werden kann.

Aus dem Dokument DE 10 2006 057 759 A1 ist ein Kettenschloss bekannt, bei dem zwischen einem Klobendorn und einem Klobenkörper eine Quetschverbindung vorgesehen ist.

In der DE 10 2006 006 891 B3 ist ein Kettenschloss mit einem Sicherungsteil und einer Kette offenbart, die an einem Ende dauerhaft an dem Sicherungsteil befestigt ist, wobei die Kette ein Kettenendglied mit einem verschmälerten Längsabschnitt aufweist, der in einen Aufnahmeschlitz des Sicherungsteils eingesetzt und dort mittels eines Stifts fixiert ist.

Die US 1 511 119 A offenbart ein Reifenschloss, welches mittels einer Kette und eines zusätzlichen Riemens befestigt wird, wobei ein Ende der Kette in einer Einkerbung aufgenommen und mittels eines Stifts gehalten wird.

Es ist die Aufgabe der Erfindung, ein Kettenschloss anzugeben, bei dem ein Ende der Kette auf einfache und dennoch zuverlässige Weise dauerhaft an einem zugeordneten Sicherungsteil befestigt ist.

Diese Aufgabe wird durch ein Kettenschloss mit den Merkmalen des Anspruchs 1 gelöst, und insbesondere dadurch, dass die Kette ein Kettenendglied mit einem Befestigungsdorn aufweist, wobei ein Einführabschnitt des Befestigungsdorns in eine Aufnahmeöffnung des Sicherungsteils eingesetzt ist, wobei der Einführabschnitt des Befestigungsdorns an seinem Ende einen Fortsatz mit einem nicht-kreisrunden Querschnitt aufweist, und wobei die Aufnahmeöffnung des Sicherungsteils einen Aufnahmeabschnitt aufweist, in dem der Fortsatz des Befestigungsdorns zumindest im Wesentlichen formschlüssig aufgenommen ist.

Die Kette kann mehrere Kettenglieder aufweisen, von denen eines mit dem Kettenendglied fest verbunden ist, insbesondere durch gegenseitigen Eingriff. Hierfür kann das Kettenendglied eine Öse aufweisen, mit welcher der Befestigungsdorn fest verbunden ist, wobei die Öse und der Befestigungsdorn insbesondere integral ausgebildet sein können.

Der Befestigungsdorn kann eine längliche und insbesondere geradlinige Form aufweisen. Für die dauerhafte Befestigung des Kettenendglieds an dem Sicherungsteil ist vorgesehen, dass ein Einführabschnitt des Befestigungsdorns in eine Aufnahmeöffnung des Sicherungsteils eingesetzt wird, wobei die endgültige Fixierung des Befestigungsdorns in der Aufnahmeöffnung auf vielfältige Weise möglich ist, beispielsweise durch radiales Verpressen bzw. Quetschen des Sicherungsteils in der Umgebung der Aufnahmeöffnung, durch Eintreiben eines oder mehrerer Befestigungsstifte und/oder durch Verschweißen.

Erfindungsgemäß weist der Einführabschnitt des Befestigungsdorns an seinem freien Ende einen Fortsatz, insbesondere einen integralen Verlängerungsabschnitt, mit einem nicht-kreisrunden Querschnitt auf, wobei die Aufnahmeöffnung des zugeordneten Sicherungsteils einen zumindest im Wesentlichen formkomplementären Aufnahmeabschnitt aufweist, in dem der Fortsatz des Befestigungsdorns aufgenommen wird. Beispielsweise können der Fortsatz des Befestigungsdorns und dementsprechend der Aufnahmeabschnitt des Sicherungsteils einen Querschnitt in Form eines länglichen Rechtecks aufweisen. Der Aufnahmeabschnitt kann das Ende der Aufnahmeöffnung bilden. Der Aufnahmeabschnitt kann durch einen Boden der Aufnahmeöffnung begrenzt sein, wenn diese in dem Sicherungsteil ein Sackloch bildet.

Hierdurch wird erreicht, dass der in dem Sicherungsteil aufgenommene Befestigungsdorn hinreichend zuverlässig gegen ein gewaltsames Verdrehen relativ zu dem Sicherungsteil, d.h. bezüglich einer Torsion, fixiert ist. Insbesondere kann ein von außen auf den Befestigungsdorn aufgebrachtes Drehmoment über die Länge des Befestigungsdorns aufgenommen werden, wobei die endgültige Lagefixierung des Befestigungsdorns in Drehrichtung an seiner Spitze erfolgt, also an dem genannten Fortsatz des Befestigungsdorns, der im Unterschied zu einer aus dem Sicherungsteil herausragenden Öse des Kettenendglieds relativ tief innerhalb des Sicherungsteils angeordnet ist.

Ein "nicht-kreisrunder" Querschnitt des Fortsatzes des Befestigungsdorns bedeutet in diesem Zusammenhang insbesondere einen mehreckigen Querschnitt, z.B. dreieckig, viereckig, fünfeckig oder sechseckig, wobei die Verbindungslinien zwischen den Ecken der Querschnittsform geradlinig oder auch gekrümmt sein können. Bei einem mehreckigen Querschnitt kann vorgesehen sein, dass an jeder Ecke der Querschnittsform die angrenzenden Verbindungslinien aus der Sicht des Zentrums der Querschnittsform einen spitzen, rechten oder stumpfen Winkel zueinander bilden (d.h. einen Winkel < 180°), wie dies beispielsweise bei einem Dreieck oder Rechteck der Fall ist. Alternativ hierzu kann vorgesehen sein, dass lediglich an einigen Ecken die angrenzenden Verbindungslinien einen spitzen, rechten oder stumpfen Winkel zueinander bilden (d.h. einen Winkel < 180°) und dass an anderen Ecken die angrenzenden Verbindungslinien einen überstumpfen Winkel zueinander bilden (d.h. einen Winkel > 180° und < 360°). Dies ist beispielsweise der Fall, wenn der Querschnitt des Fortsatzes die Form eines Kreuzes (Drehmomentübertragung nach Art eines Kreuzschraubendrehers) oder eines Sterns aufweist.

Dass der Fortsatz des Befestigungsdorns in dem zugeordneten Aufnahmeabschnitt des Sicherungsteils "zumindest im Wesentlichen" formschlüssig aufgenommen sein soll, bedeutet, dass herstellungsübliche Toleranzen vorgesehen sein können, wie sie insbesondere bei Gussteilen typischerweise vorgesehen werden, insbesondere wenn eine spanende Nachbearbeitung nicht erforderlich sein soll, um gleichwohl eine problemlose Verbindbarkeit (Fügen) der beiden Teile zu gewährleisten. Wichtig ist, dass der Aufnahmeabschnitt der Aufnahmeöffnung im Querschnitt komplementär zu der nicht-kreisrunden Grundform des Fortsatzes des Befestigungsdorns ausgebildet ist.

Der Fortsatz des Befestigungsdorns weist einen anderen Querschnitt auf als der Einführabschnitt des Befestigungsdorns. Hierdurch kann der Fortsatz des Befestigungsdorns für einen optimalen Kraftschluss bzw. eine optimale Drehmomentübertragung in dem Aufnahmeabschnitt der Aufnahmeöffnung angepasst sein, während der Einführabschnitt des Befestigungsdorns für ein fertigungstechnisch besonders einfaches Einsetzen in die Aufnahmeöffnung des Sicherungsteils ausgelegt sein kann.

Vorteilhafte Ausführungsformen der Erfindung sind in den abhängigen Ansprüchen und nachstehend beschrieben.

Gemäß einer Ausführungsform ist der Einführabschnitt des Befestigungsdorns nicht genau formschlüssig in der Aufnahmeöffnung des Sicherungsteils aufgenommen. Dies kann fertigungstechnisch wünschenswert sein, um ein problemloses Einsetzen des Befestigungsdorns in das Sicherungsteil zu gewährleisten. Ferner kann sich hierdurch dasselbe Sicherungsteil auch zum Aufnehmen anderer Schlaufenelemente eignen, beispielsweise wenn ein identisches Sicherungsteil nicht nur für ein Kettenschloss, sondern auch für ein Seilschloss verwendbar sein soll, bei dem eine Drahtseillitze in die Aufnahmeöffnung des Sicherungsteils eingesetzt und dort fixiert wird. Insbesondere kann der Einführabschnitt des Befestigungsdorns mit größeren Toleranzen in der Aufnahmeöffnung des Sicherungsteils aufgenommen sein als die Anordnung des Fortsatzes des Befestigungsdorns in dem Aufnahmeabschnitt der Aufnahmeöffnung. Diese Merkmale können insbesondere auf einen Montagezustand des Kettenschlosses vor einem Verpressen des Sicherungsteils zum Zwecke eines Fixierens des Befestigungsdorns bezogen sein. Nach einem derartigen Verpressen (Ausbilden einer Quetschverbindung) kann die Querschnittsform des Befestigungsdorns und/oder der Aufnahmeöffnung bezüglich der nachstehenden Erläuterungen aufgrund von Verformung modifiziert sein.

Gemäß einer weiteren Ausführungsform ist der Einführabschnitt des Befestigungsdorns in der Aufnahmeöffnung des Sicherungsteils, wie bereits erwähnt, durch einen Presssitz gehalten und hierdurch fixiert. Hierfür kann ein Verpressen bzw. Quetschen des Sicherungsteils in der Umgebung der Aufnahmeöffnung in radialer Richtung bezüglich einer Längsachse des Befestigungsdorns vorgesehen sein, wodurch der Umfang des Sicherungsteils in der Umgebung der Aufnahmeöffnung verringert wird.

Gemäß einer weiteren Ausführungsform weist der Fortsatz des Befestigungsdorns einen kleineren Querschnitt auf als der Einführabschnitt des Befestigungsdorns. Der an der Spitze des Befestigungsdorns vorgesehene Fortsatz kann somit eine Verjüngung oder Abflachung des Befestigungsdorns bilden.

Gemäß einer Ausführungsform kann der Fortsatz des Befestigungsdorns einen Querschnitt aufweisen, der zumindest im Wesentlichen die Form eines länglichen Rechtecks besitzt. Hierdurch kann der Fortsatz eine Abflachung bilden. Die langen Seiten der Rechteckform können beispielsweise ungefähr doppelt so lang sein wie die kurzen Seiten der Rechteckform. Wie bereits erwähnt, sind jedoch auch andere Querschnittsformen möglich, z.B. ein Dreieck, ein Quadrat, ein Kreuz oder ein Stern.

Auch der Aufnahmeabschnitt der Aufnahmeöffnung kann bei dieser Ausführungsform dementsprechend zumindest im Wesentlichen einen rechteckigen Querschnitt aufweisen. Hierdurch ist ein besonders guter Kraftschluss bzw. eine besonders gute Drehmomentübertragung von dem Befestigungsdorn über den Fortsatz auf die umfängliche Begrenzung des Aufnahmeabschnitts der Aufnahmeöffnung möglich.

Vorzugsweise bildet der Aufnahmeabschnitt bezüglich der Aufnahmeöffnung eine Verengung.

Gemäß einer Ausführungsform kann der Einführabschnitt des Befestigungsdorns einen quadratischen Querschnitt aufweisen. Hierdurch ist ebenfalls die Übertragung eines Drehmoments von dem Einführabschnitt des Befestigungsdorns auf die umfängliche Begrenzung der Aufnahmeöffnung möglich.

Weiterhin ist es bevorzugt, wenn das Material des Befestigungsdorns eine höhere Zähigkeit aufweist als das Material des Sicherungsteils. Beispielsweise kann der Befestigungsdorn aus einem Stahl gebildet sein, während das Sicherungsteil aus Zinkdruckguss gebildet ist. Hierdurch ist bei Aufbringen eines Drehmoments auf den Befestigungsdorn eine gewisse Verformung des Befestigungsdorns in Drehrichtung (Torsion) über die Länge des Einführabschnitts möglich, während das Ende des Einführabschnitts - also der genannte Fortsatz - stabil in dem Aufnahmeabschnitts des Sicherungsteils gehalten wird, ohne dass der Einführabschnitt hierbei abbricht.

Gemäß einer Ausführungsform kann wenigstens ein Befestigungsstift vorgesehen sein, der bezüglich einer Längsachse des Befestigungsdorns in radialer Richtung teilweise in das Sicherungsteil und teilweise in den Befestigungsdorn eingreift. Hierdurch kann eine weitere Fixierung des Befestigungsdorns in der Aufnahmeöffnung des Sicherungsteils bewirkt werden.

Das genannte Sicherungsteil des Kettenschlosses kann generell einen Schlosskörper; oder einen Sicherungszapfen, der an einem Schlosskörper verriegelbar ist; oder einen Kloben, der an einem Schlosskörper verriegelbar ist, umfassen. Insbesondere kann das Sicherungsteil einen Teil eines Zahlenschlosses oder eines schlüsselbetätigten Schlosses bilden. Ein Sicherungszapfen eines solchen Kettenschlosses kann beispielsweise mehrere Erhebungen und hierzu benachbarte Vertiefungen für eine entsprechende Anzahl von Zahlenringen eines Zahlenkombinations-Verriegelungsmechanismus aufweisen. Ein Kloben eines solchen Kettenschlosses kann insbesondere eine durch eine Umfangsnut begrenzte Verdickung für einen Schlüssel-Verriegelungsmechanismus aufweisen, wobei beispielsweise eine oder mehrere Verriegelungskugeln wahlweise in die Umfangsnut eingreifen können.

Gemäß einer Ausführungsform des erfindungsgemäßen Kettenschlosses kann dieses auch mehrere Befestigungen der erläuterten Art aufweisen. Insbesondere kann die Kette an einem anderen Ende dauerhaft an einem weiteren Sicherungsteil des Kettenschlosses befestigt sein, wobei die Kette an dem anderen Ende ein weiteres Kettenendglied mit einem weiteren Befestigungsdorn aufweist, wobei ein Einführabschnitt des weiteren Befestigungsdorns in eine Aufnahmeöffnung des weiteren Sicherungsteils eingesetzt ist, wobei der Einführabschnitt des weiteren Befestigungsdorns an seinem Ende einen Fortsatz mit einem nicht-kreisrunden Querschnitt aufweist, und wobei die Aufnahmeöffnung des weiteren Sicherungsteils einen Aufnahmeabschnitt aufweist, in dem der Fortsatz des weiteren Befestigungsdorns zumindest im Wesentlichen formschlüssig aufgenommen ist. Beispielsweise kann der eine Sicherungsabschnitt einen Sicherungszapfen oder einen Kloben umfassen, wobei der andere Sicherungsabschnitt einen Schlosskörper umfasst, und wobei die beiden Sicherungsabschnitte über die Kette dauerhaft, jedoch flexibel miteinander verbunden sind.

Die Erfindung wird nachfolgend lediglich beispielhaft unter Bezugnahme auf die Zeichnungen erläutert.
- Fig. 1: zeigt zwei ineinander greifende Sicherungsteile eines Kettenschlosses mit Zahlenkombinations-Verriegelungsmechanismus, wobei die Kette nicht gezeigt ist.
- Fig. 2: zeigt die zwei Sicherungsteile gemäß Fig. 1, wobei jeweils eine Hälfte von jeweiligen Abdeckelementen und die Zahlenringe des Zahlenkombinations-Verriegelungsmechanismus entfernt sind.
- Fig. 3: zeigt die zwei Sicherungsteile gemäß Fig. 2 in einer Längsschnittansicht, wobei die Schnittebene nahezu mittig angeordnet ist.
- Fig. 4: zeigt die Anordnung gemäß Fig. 2 in einer Perspektivansicht auf die Rückseite eines der beiden Sicherungsteile mit Blick in eine Aufnahmeöffnung dieses Sicherungsteils.
- Fig. 5: zeigt ein Kettenendglied zur Befestigung in einem der zwei Sicherungsteile gemäß Fig. 1.

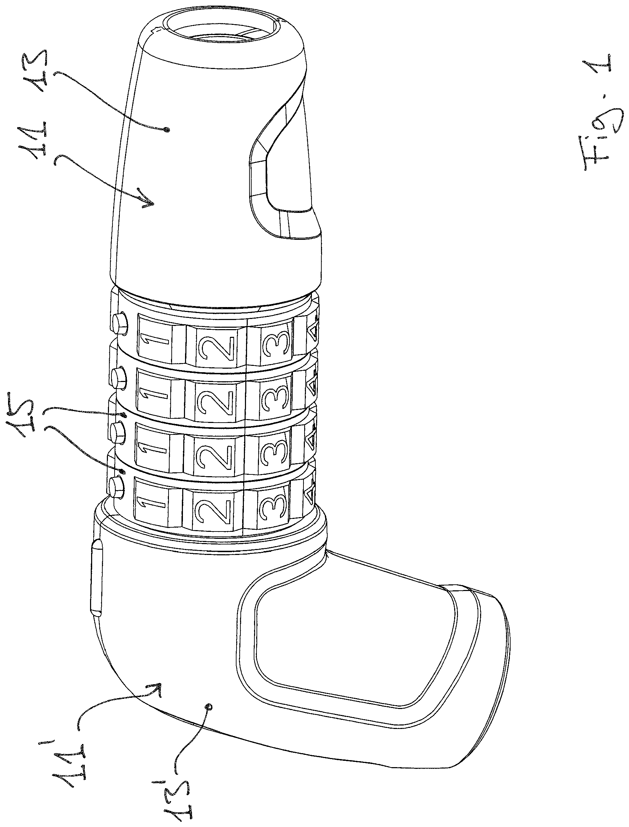

Figur 1 zeigt in einer Perspektivansicht ein Sicherungsteil 11 und ein weiteres Sicherungsteil 11', von denen ein jeweiliges Abdeckelement 13 bzw. 13' zu erkennen ist. Zwischen den beiden Sicherungsteilen 11, 11' sind vier Zahlenringe 15 eines Zahlenkombinations-Verriegelungsmechanismus zu sehen. Die Sicherungsteile 11, 11' bilden Teile eines Kettenschlosses, dessen weitere Teile - insbesondere eine Kette mit Kettenendgliedern - in Figur 1 nicht dargestellt sind.

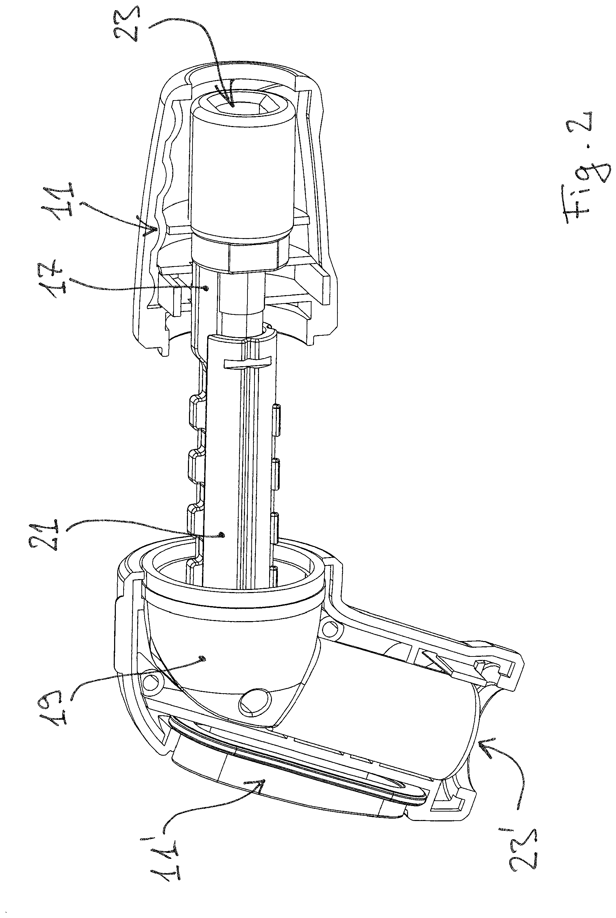

In Figur 2 sind die dem Betrachter zugewandten Teile der Abdeckelemente 13, 13' sowie die Zahlenringe 15 entfernt. Hierdurch ist ersichtlich, dass das eine Sicherungsteil 11 einen Sicherungszapfen 17 umfasst, während das weitere Sicherungsteil 11' einen Schlosskörper 19 mit einer Führungshülse 21 für den Sicherungszapfen 17 umfasst. Der Sicherungszapfen 17 und der Schlosskörper 19 weisen eine jeweilige Aufnahmeöffnung 23, 23' zum Befestigen eines jeweiliges Kettenendgliedes auf.

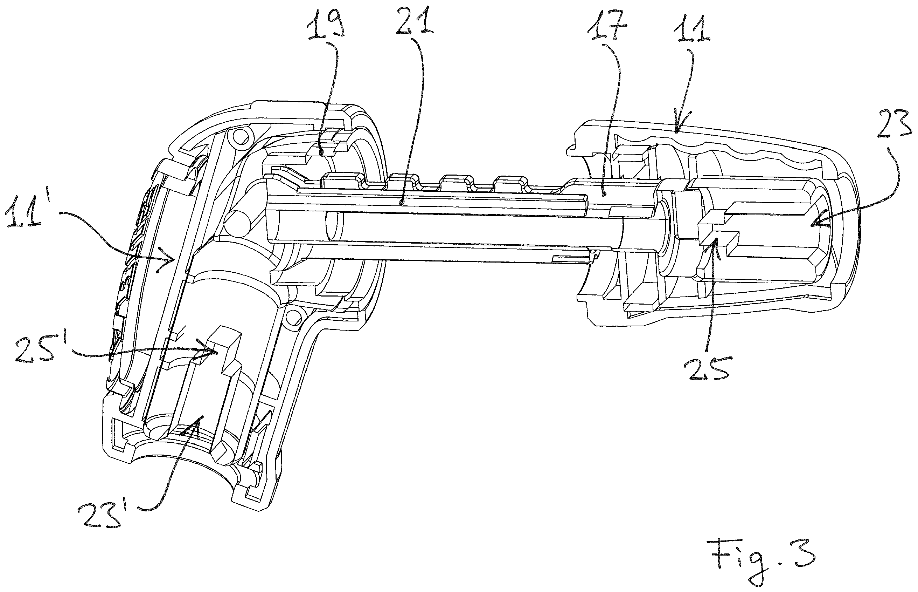

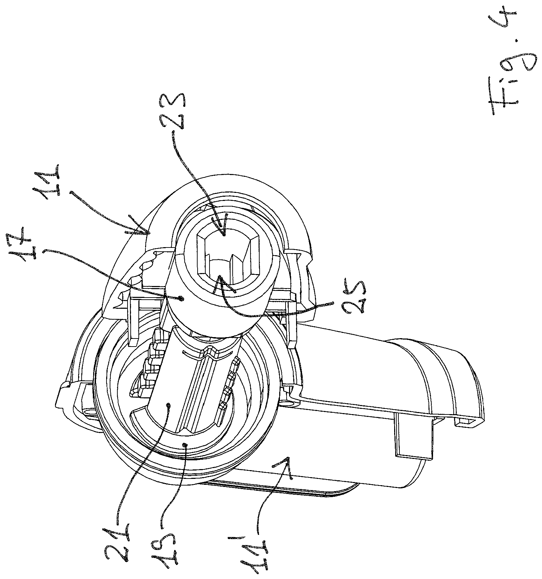

Aus der Schnittansicht gemäß Figur 3 ist ersichtlich, dass die Aufnahmeöffnungen 23, 23' eine Längsform aufweisen und an ihrem Ende in einen jeweiligen Aufnahmeabschnitt 25, 25' mit verringertem Querschnitt münden. Aus der Perspektivansicht gemäß Figur 4 ist ersichtlich, dass die Aufnahmeöffnung 23 einen konstanten viereckigen Querschnitt aufweist, mit zwei parallelen geradlinigen Seiten und zwei kreisbogenförmigen Seiten. Aus Figur 3 und 4 ist ferner zu erkennen, dass der jeweilige Aufnahmeabschnitt 25, 25' einen im Wesentlichen rechteckigen Querschnitt aufweist, wobei die Querschnittsform zwei parallele geradlinige Seiten besitzt, die bezüglich der geradlinigen Seiten des Querschnitts der jeweiligen Aufnahmeöffnung 23, 23' jedoch nach radial innen versetzt sind, sodass der jeweilige Aufnahmeabschnitt 25, 25' eine Verengung bildet. Die kurzen Seiten der Rechteckform des jeweiligen Aufnahmeabschnitts 25, 25' sind kreisbogenförmig.

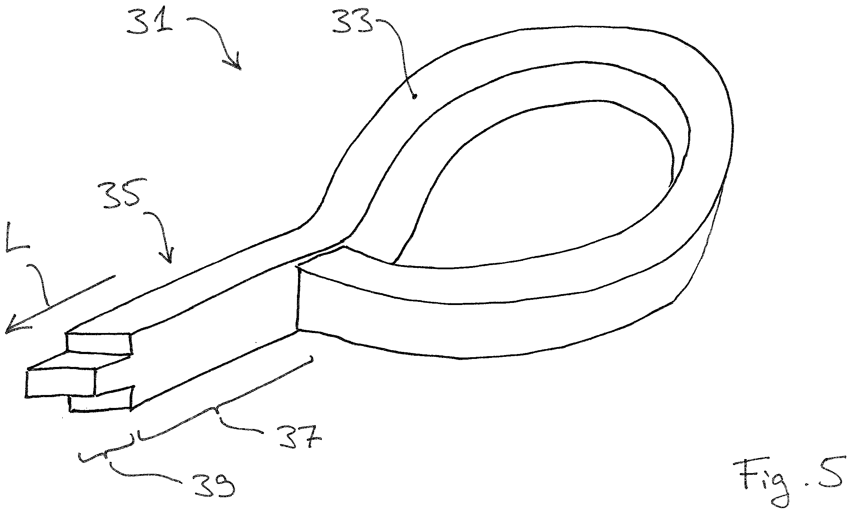

In Figur 5 ist ein zugeordnetes Kettenendglied 31 gezeigt. Das Kettenendglied 31 weist eine Öse 33 und einen Befestigungsdorn 35 auf. Der Befestigungsdorn 35 erstreckt sich geradlinig entlang einer Längsachse L. Die Öse 33 und der Befestigungsdorn 35 besitzen einen quadratischen Querschnitt. Der Befestigungsdorn 35 weist einen Einführabschnitt 37 auf, der an die Öse 33 angrenzt. Ferner weist der Befestigungsdorn 35 an seinem freien Ende einen Fortsatz 39 auf, der gegenüber dem Einführabschnitt 37 eine stufenförmige Abflachung bildet. Der Querschnitt des Fortsatzes 39 besitzt die Form eines länglichen Rechtecks.

Um eine Kette (nicht dargestellt) an dem Sicherungsteil 11 oder 11' gemäß Fig. 1 dauerhaft zu befestigen, kann der Befestigungsdorn 35 des Kettenendgliedes 31 gemäß Figur 5 mit seinem Einführabschnitt 37 in die Aufnahmeöffnung 23, 23' des Sicherungsteils 11, 11' eingesetzt werden. Hierbei greift der Fortsatz 39 in den Aufnahmeabschnitt 25, 25' am Ende der jeweiligen Aufnahmeöffnung 23, 23' zumindest im Wesentlichen formschlüssig ein, wobei der im Wesentlichen rechteckige Fortsatz 39 zumindest an den langen Seiten der Rechteckform spielfrei oder nahezu spielfrei von der umfänglichen Begrenzung des Aufnahmeabschnitts 25, 25' umschlossen ist. Bei der Herstellung des Kettenschlosses kann nach dem Einsetzen des Befestigungsdorns 35 in die jeweilige Aufnahmeöffnung 23, 23' noch ein radiales Verpressen des Sicherungsteils 11, 11' an dem Befestigungsdorn 35 erfolgen, um das Kettenendglied 31 gegen ein Herausziehen aus der Aufnahmeöffnung 23, 23' des Sicherungsteils 11, 11' zu fixieren.

Durch das im Wesentlichen formschlüssige Aufnehmen des Fortsatzes 39 - also der Spitze des Befestigungsdorns 35 - in dem Aufnahmeabschnitt 25, 25' am Ende der Aufnahmeöffnung 23, 23' wird erreicht, dass der in dem Sicherungsteil 11, 11' fixierte Befestigungsdorn 35 auch gegen ein gewaltsames Verdrehen um seine Längsachse L, d.h. bzgl. einer Torsion, festgelegt ist, um auch bei Aufbringen hoher Drehmomente zu verhindern, dass der Befestigungsdorn 35 innerhalb der Aufnahmeöffnung 23, 23' gedreht wird. Hierbei handelt sich um eine fertigungstechnisch einfach zu realisierende Maßnahme, die jedoch eine ausreichende Wirkung zeigt.

### Bezugszeichenliste

- 11, 11': Sicherungsteil
- 13, 13': Abdeckelement
- 15: Zahlenring
- 17: Sicherungszapfen
- 19: Schlosskörper
- 21: Führungshülse
- 23, 23': Aufnahmeöffnung
- 25, 25': Aufnahmeabschnitt
- 31: Kettenendglied
- 33: Hülse
- 35: Befestigungsdorn
- 37: Einführabschnitt
- 39: Fortsatz
- L: Längsachse

## Patentansprüche

1. Kettenschloss mit wenigstens einem Sicherungsteil (11) und einer Kette, die an einem Ende dauerhaft an dem Sicherungsteil (11) befestigt ist, wobei die Kette ein Kettenendglied (31) mit einem Befestigungsdorn (35) aufweist, wobei ein Einführabschnitt (37) des Befestigungsdorns (35) in eine Aufnahmeöffnung (23) des Sicherungsteils (11) eingesetzt ist, wobei der Einführabschnitt (37) des Befestigungsdorns (35) an seinem Ende einen Fortsatz (39) mit einem nicht-kreisrunden Querschnitt aufweist, wobei der Fortsatz (39) des Befestigungsdorns (35) einen anderen Querschnitt aufweist als der Einführabschnitt (37) des Befestigungsdorns (35), und wobei die Aufnahmeöffnung (23) des Sicherungsteils (11) einen Aufnahmeabschnitt (25) aufweist, in dem der Fortsatz (39) des Befestigungsdorns (35) zumindest im Wesentlichen formschlüssig aufgenommen ist.

2. Kettenschloss nach Anspruch 1,
wobei der Einführabschnitt (37) des Befestigungsdorns (35) nicht genau formschlüssig in der Aufnahmeöffnung (23) des Sicherungsteils (11) aufgenommen ist.

3. Kettenschloss nach Anspruch 1 oder 2,
wobei der Einführabschnitt (37) des Befestigungsdorns (35) in der Aufnahmeöffnung (23) des Sicherungsteils (11) durch einen Presssitz gehalten ist.

4. Kettenschloss nach einem der vorhergehenden Ansprüche,
wobei der Fortsatz (39) des Befestigungsdorns (35) einen kleineren Querschnitt aufweist als der Einführabschnitt (37) des Befestigungsdorns (35).

5. Kettenschloss nach einem der vorhergehenden Ansprüche,
wobei der Fortsatz (39) des Befestigungsdorns (35) einen Querschnitt aufweist, der zumindest im Wesentlichen die Form eines länglichen Rechtecks besitzt.

6. Kettenschloss nach einem der vorhergehenden Ansprüche,
wobei der Einführabschnitt (37) des Befestigungsdorns (35) einen quadratischen Querschnitt aufweist.

7. Kettenschloss nach einem der vorhergehenden Ansprüche,
wobei das Material des Befestigungsdorns (35) eine höhere Zähigkeit aufweist als das Material des Sicherungsteils (11).

8. Kettenschloss nach einem der vorhergehenden Ansprüche,
wobei wenigstens ein Befestigungsstift vorgesehen ist, der bezüglich einer Längsachse (L) des Befestigungsdorns (35) in radialer Richtung teilweise in das Sicherungsteil (11) und teilweise in den Befestigungsdorn (35) eingreift.

9. Kettenschloss nach einem der vorhergehenden Ansprüche,
wobei das Sicherungsteil (11):
einen Schlosskörper (19);
einen Sicherungszapfen (17), der an einem Schlosskörper (19) verriegelbar ist; oder
einen Kloben, der an einem Schlosskörper verriegelbar ist,
umfasst.

10. Kettenschloss nach einem der vorhergehenden Ansprüche,
wobei die Kette an einem anderen Ende dauerhaft an einem weiteren Sicherungsteil (11') befestigt ist, wobei die Kette an dem anderen Ende ein weiteres Kettenendglied (31) mit einem weiteren Befestigungsdorn (35) aufweist, wobei ein Einführabschnitt (37) des weiteren Befestigungsdorns (35) in eine Aufnahmeöffnung (23') des weiteren Sicherungsteils (11') eingesetzt ist, wobei der Einführabschnitt (37) des weiteren Befestigungsdorns (35) an seinem Ende einen Fortsatz (39) mit einem nicht-kreisrunden Querschnitt aufweist, und wobei die Aufnahmeöffnung (23') des weiteren Sicherungsteils (11) einen Aufnahmeabschnitt (25') aufweist, in dem der Fortsatz (39) des weiteren Befestigungsdorns (35) zumindest im Wesentlichen formschlüssig aufgenommen ist.

## Claims

1. A chain lock having at least one securing part (11) and a chain which is permanently fastened to the securing part (11) at one end, wherein the chain has a chain end link (31) having a fastening mandrel (35); wherein an introduction section (37) of the fastening mandrel (35) is inserted into a reception opening (23) of the securing part (11); wherein the introduction section (37) of the fastening mandrel (35) has a prolongation (39) having a non-circular cross-section at its end; wherein the prolongation (39) of the fastening mandrel (35) has a different cross-section than the introduction section (37) of the fastening mandrel (35); and wherein the reception opening (23) of the securing part (11) has a reception section (25) in which the prolongation (39) of the fastening mandrel (35) is received in an at least substantially shape-matched manner.

2. A chain lock in accordance with claim 1,
wherein the introduction section (37) of the fastening mandrel (35) is not received in exactly a shape-matched manner in the reception opening (23) of the securing part (11).

3. A chain lock in accordance with claim 1 or claim 2,
wherein the introduction section (37) of the fastening mandrel (35) is held by a press fit in the reception opening (23) of the securing part (11).

4. A chain lock in accordance with any one of the preceding claims,
wherein the prolongation (39) of the fastening mandrel (35) has a smaller cross-section than the introduction section (37) of the fastening mandrel (35).

5. A chain lock in accordance with any one of the preceding claims,
wherein the prolongation (39) of the fastening mandrel (35) has a cross-section which at least substantially has the shape of an elongate rectangle.

6. A chain lock in accordance with any one of the preceding claims,
wherein the introduction section (37) of the fastening mandrel (35) has a quadratic cross-section.

7. A chain lock in accordance with any one of the preceding claims,
wherein the material of the fastening mandrel (35) has a higher toughness than the material of the securing part (11).

8. A chain lock in accordance with any one of the preceding claims,
wherein at least one fastening pin is provided which engages partly into the securing part (11) and partly into the fastening mandrel (35) in a radial direction with respect to a longitudinal axis (L) of the fastening mandrel (35).

9. A chain lock in accordance with any one of the preceding claims,
wherein the securing part (11) comprises:
a lock body (19);
a securing spigot (17) which is lockable to a lock body (19); or
a bolt which is lockable to a lock body.

10. A chain lock in accordance with any one of the preceding claims,
wherein the chain is permanently fastened at another end to a further securing part (11'); wherein the chain has a further chain end link (31) having a further fastening mandrel (35) at the other end; wherein an introduction section (37) of the further fastening mandrel (35) is inserted into a reception opening (23') of the further securing part (11'); wherein the introduction section (37) of the further fastening mandrel (35) has a prolongation (39) with a non-circular cross-section at its end; and wherein the reception opening (23') of the further securing part (11) has a reception section (25') in which the prolongation (39) of the further fastening mandrel (35) is received in an at least substantially shape-matched manner.

## Revendications

1. Antivol à chaîne comportant au moins une partie de blocage (11) et une chaîne qui est fixée par une extrémité de manière permanente à la partie de blocage (11),
dans lequel
la chaîne comprend un maillon d'extrémité de chaîne (31) ayant un mandrin de fixation (35),
une portion d'insertion (37) du mandrin de fixation (35) est insérée dans une ouverture de réception (23) de la partie de blocage (11),
la portion d'insertion (37) du mandrin de fixation (35) présente à son extrémité un prolongement (39) de section transversale non circulaire,
le prolongement (39) du mandrin de fixation (35) présente une section transversale différente de celle de la portion d'insertion (37) du mandrin de fixation (35), et
l'ouverture de réception (23) de la partie de blocage (11) présente une portion de réception (25) dans laquelle le prolongement (39) du mandrin de fixation (35) est reçu au moins sensiblement par coopération de forme.

2. Antivol à chaîne selon la revendication 1,
dans lequel
la portion d'insertion (37) du mandrin de fixation (35) est reçue dans l'ouverture de réception (23) de la partie de blocage (11) par coopération de forme non précise.

3. Antivol à chaîne selon la revendication 1 ou 2,
dans lequel
la portion d'insertion (37) du mandrin de fixation (35) est maintenue par ajustement serré dans l'ouverture de réception (23) de la partie de blocage (11).

4. Antivol à chaîne selon l'une des revendications précédentes,
dans lequel
le prolongement (39) du mandrin de fixation (35) présente une section transversale plus petite que celle de la portion d'insertion (37) du mandrin de fixation (35).

5. Antivol à chaîne selon l'une des revendications précédentes,
dans lequel
le prolongement (39) du mandrin de fixation (35) présente une section transversale qui a au moins sensiblement la forme d'un rectangle allongé.

6. Antivol à chaîne selon l'une des revendications précédentes,
dans lequel
la portion d'insertion (37) du mandrin de fixation (35) présente une section transversale carrée.

7. Antivol à chaîne selon l'une des revendications précédentes,
dans lequel
le matériau du mandrin de fixation (35) présente une ténacité plus élevée que celle du matériau de la partie de blocage (11).

8. Antivol à chaîne selon l'une des revendications précédentes,
dans lequel
il est prévu au moins une goupille de fixation qui, par rapport à un axe longitudinal (L) du mandrin de fixation (35), s'engage dans la direction radiale en partie dans la partie de blocage (11) et en partie dans le mandrin de fixation (35).

9. Antivol à chaîne selon l'une des revendications précédentes,
dans lequel
la partie de blocage (11) comprend :
un corps d'antivol (19) ;
un tenon de blocage (17) qui peut être verrouillée à un corps d'antivol (19) ;
ou
un gond qui peut être verrouillé à un corps d'antivol.

10. Antivol à chaîne selon l'une des revendications précédentes,
dans lequel
la chaîne peut être fixée par une autre extrémité de manière permanente à une autre partie de blocage (11'),
la chaîne présente à l'autre extrémité un autre maillon d'extrémité de chaîne (31) avec un autre mandrin de fixation (35),
une portion d'insertion (37) de l'autre mandrin de fixation (35) est insérée dans une ouverture de réception (23') de l'autre partie de blocage (11'), la portion d'insertion (37) de l'autre mandrin de fixation (35) présente à son extrémité un prolongement (39) de section transversale non circulaire, et l'ouverture de réception (23') de l'autre partie de blocage (11) présente une portion de réception (25') dans laquelle le prolongement (39) de l'autre mandrin de fixation (35) est reçu au moins sensiblement par coopération de forme.
